# EUROPEAN PATENT SPECIFICATION

(11) **EP 2 370 624 B1**
(45) Date of publication and mention of the grant of the patent: **26.10.2016**
(21) Application number: 09833034.3
(22) Date of filing: 25.11.2009
(51) Int. Cl.: B32B 5/02, B32B 5/08, B32B 5/26, D04H 3/10, D04H 13/00, D04H 3/14

(54) **A NONWOVEN COMPOSITE AND METHOD FOR MAKING THE SAME**
VLIESVERBUNDSTOFF UND HERSTELLUNGSVERFAHREN DAFÜR
COMPOSITE NON TISSÉ ET PROCÉDÉ DE FABRICATION ASSOCIÉ

(30) Priority: 19.12.2008 US 339660; 17.06.2009 US 486015
(43) Date of publication of application: 05.10.2011
(73) Proprietor: Kimberly-Clark Worldwide, Inc., Neenah, Wisconsin 54956 (US)
(72) Inventor: CHAMBERS JR., Leon, Eugene, Cumming GA 30041 (US); ADAM, Gabriel, Hammam, Alpharetta GA 30004 (US); SMITH, Reginald, Roswell GA 30076 (US)
(74) Representative: Davies, Christopher Robert
(86) International application number: PCT/IB2009/055341
(87) International publication number: WO 2010/070508

(56) References cited:
- KR-A- 20000 010 731
- KR-A- 20060 115 902
- US-A1- 2003 203 695
- US-A1- 2004 010 895
- US-A1- 2004 154 731
- US-A1- 2005 112 980
- US-A1- 2006 191 115
- US-B1- 6 550 115

## Description

### FIELD OF THE INVENTION

The present invention pertains to a nonwoven composite and method, and more particularly to a nonwoven composite including a nonwoven web that is lightly bonded with hot air and hydroentangled, and method for making.

### BACKGROUND OF THE INVENTION

In one example of the process of production of a continuous filament nonwoven web, small diameter spunbond filaments are formed by extruding molten thermoplastic material as filaments from a plurality of fine, usually circular capillaries of a spinnerette with the diameter of the extruded filaments being rapidly reduced. Spunbond fibers are generally continuous and have diameters larger than 7 microns, more particularly, between about 10 and 30 microns. The fibers are usually deposited on a moving foraminous belt or forming wire where they form a web.

The web then generally moves on to a more substantial second bonding step where it may be bonded with other nonwoven webs such as, by way of example, spunbond, meltblown, or bonded carded webs, or the like. This step of bonding can be accomplished in a number of ways such as by hydroentangling, needling, ultrasonic bonding, through air bonding, adhesive bonding, thermal point bonding, and calendering.

With respect to the first bonding step, these webs are bonded in some manner immediately as they are produced in order to add to their structural integrity for further processing into a finished product. Increasing the continuous filament web's integrity is necessary in order to maintain its form during post formation processing. Generally, either hot or cold compaction is used immediately after the formation of the web. Hot or cold compaction is accomplished by "compaction rolls" which squeeze the web in order to increase its self-adherence and thereby its integrity. Compaction rolls perform this function, but have a number of drawbacks. One such drawback is that compaction rolls do compact the web, causing a decrease in bulk or loft in the fabric which may be undesirable for end use. A second drawback is that compaction can cause permanent deformation or damage to the individual fibers. A third drawback to compaction rolls is that the fabric will sometimes wrap around one or both of the rolls, causing a shutdown of the fabric production line for cleaning of the rolls, with the accompanying obvious loss in production during the down time. A fourth drawback to compaction rolls is that if a slight imperfection is produced in formation of the web, such as a drop of polymer being formed into the web, the compaction roll can force the drop into the foraminous forming belt, onto which most webs are formed, causing an imperfection in the belt and ruining it.

Another method to increase the integrity of the continuous filament web is to immediately hydroentangle the web on the same foraminous forming belt on which the fibers were formed. However, this method presents issues in regard to wetting the belt and not being able to completely de-water/dry the belt before it is required again for forming of the web. This also results in issues in regard to optimization of the belt for both forming and hydroentangling without detrimental effect on either process, web removal from the belt for subsequent processing, and water contamination.

Another method to increase the integrity of a continuous filament web is to transfer the continuous filament web from the forming belt onto a hydroentangling belt and to immediately hydroentangle the web. This method presents issues in regard to transfer of the continuous filament web without severe disruption of the fiber matrix and high speed operation without a loss in material thread. In addition, immediate hydroentangling of lightweight continuous filament webs (whether on the forming belt or a separate hydroentangling belt) that do not have some sort of temporary consolidation, e.g., mechanical, thermal, results in disruption of the fiber formation when the high pressure streams of water are utilized for web consolidation. Potential solutions to this issue are to utilize a large number of hydroentangling stations to gradually increase hydroentangling pressures for filament consolidation. However, this method of requiring a large number of hydroentangling stations, excessive ancillary equipment, large equipment footprint, continual energy usage, and large water volumes, thereby making this method essentially non-viable for commercial high speed applications.

### SUMMARY OF THE INVENTION

One embodiment of the present invention provides a method of making a nonwoven composite that comprises providing a continuous filament nonwoven web, lightly bonding the continuous filament nonwoven web with hot air, and hydroentangling the lightly bonded continuous filament nonwoven web. Thereafter, the method further comprises providing a first layer on the hydroentangled, lightly bonded continuous filament nonwoven web, and hydroentangling the first layer with the hydroentangled, lightly bonded continuous filament nonwoven web.

In another embodiment of the present invention there is provided a nonwoven composite that comprises a nonwoven web that is lightly bonded with hot air and hydroentangled, and a first layer hydroentangled with the nonwoven web.

The present invention provides optimum entanglement and mobility of the immediately produced continuous filaments by use of lightly bonding with hot air and hydroentangling. This virtually eliminates the undesirable movement of the continuous filaments as they move through the remaining steps of the process. The present invention is particularly advantageous when the continuous filaments have a relatively low basis weight and thus a greater tendency to move around.

### BRIEF DESCRIPTION OF THE DRAWINGS

The above-mentioned and other features of the present invention and the manner of attaining them will become more apparent, and the invention itself will be better understood by reference to the following description of the invention, taken in conjunction with the accompanying drawing, wherein:
Fig. 1 is a schematic illustration of an apparatus which may be utilized to perform a method and to make a nonwoven composite in accordance with the present invention.
Fig. 2 is a scanning electron microscope (SEM) photomicrograph (5.0 kv, x50) of the surface of a commercially produced thermally point bonded (TPB) spunbond (SB).
Fig. 3a is a SEM photomicrograph (5.0 kv, x25) of a commercially hydroentangled wiper product produced from a TPB SB and discontinuous fibers where the discontinuous fibers have been acid extracted.
Fig. 3b is a SEM photomicrograph (5.0 kv, x150) of a commercially hydroentangled wiper product produced from a TPB SB and discontinuous fibers where the discontinuous fibers have been acid extracted.
Fig. 4a is a SEM photomicrograph (5.0 kv, x100) of the surface of a continuous filament nonwoven web that has been temporarily consolidated using the hot air knife (HAK) process.
Fig. 4b is a SEM photomicrograph (5.0 kv, x800) of a single HAK bond point in a continuous filament nonwoven web that has been temporarily consolidated using the HAK process.
Fig. 4c is a SEM photomicrograph (5.0 kv, x800) of another single HAK bond point in a continuous filament nonwoven web that has been temporarily consolidated using the HAK process.
Fig. 5a is a SEM photomicrograph (5.0 kv, x100) of the surface of a continuous filament nonwoven web that has been temporarily consolidated using the HAK process and then hydroentangled.
Fig. 5b is a magnification of a SEM photomicrograph (5.0 kv, x∼700) of a single broken HAK bond point in a continuous filament nonwoven web that has been temporarily consolidated using the HAK process and then hydroentangled.
Fig. 6a is a SEM photomicrograph (5.0 kv, x100) of a nonwoven composite of the present invention where the discontinuous fibers have been acid extracted out of the composite.
Fig. 6b is a SEM photomicrograph (5.0 kv, x600) of two broken HAK bond points in a nonwoven composite of the present invention where the discontinuous fibers have been acid extracted out of the composite.
Fig. 6c is a SEM photomicrograph (5.0 kv, x400) of a single broken HAK bond point in a nonwoven composite of the present invention where the discontinuous fibers have been acid extracted out of the composite.

### DEFINITIONS

As used herein the term "staple fibers" means discontinuous fibers made from synthetic polymers such as polypropylene, polyester, post consumer recycle (PCR) fibers, polyester, nylon, and the like, and those not hydrophilic may be treated to be hydrophilic. Staple fibers may be cut fibers or the like. Staple fibers can have cross-sections that are round, bicomponent, multicomponent, shaped, hollow, or the like. Typical staple fiber lengths utilized for this invention are 3 to 12 mm with deniers from 1 to 6 dpf.

As used herein the term "pulp fibers" means fibers from natural sources such as woody and non-woody plants. Woody plants include, for example, deciduous and coniferous trees. Non-woody plants include, for example, cotton, flax, esparto grass, milkweed, straw, jute hemp, and bagasse.

As used herein the term "nonwoven web" means a web having a structure of individual fibers or threads which are interlaid, but not in an identifiable manner, as in a knitted fabric. Nonwoven webs have been formed from many processes such as, for example, meltblowing processes, spunbonding processes, and bonded carded web processes. The basis weight of nonwoven webs is usually expressed in ounces of material per square yard (osy) or grams per square meter (gsm) and the fiber diameters are usually expressed in microns or denier per fiber (dpf). (Note that to convert from osy to gsm, multiply osy by 33.91).

As used herein the term "microfibers" means small diameter fibers having an average diameter not greater than about 75 microns, for example, having an average diameter of from about 0.5 microns to about 50 microns, or more particularly, microfibers may have an average diameter of from about 0.5 microns to about 40 microns. Another frequently used expression of fiber diameter is denier, which is defined as grams per 9000 meters of a fiber. For example, the diameter of a polypropylene fiber given in microns may be converted to denier by squaring, and multiplying the result by 0.00629, thus, a 15 micron polypropylene fiber has a denier of about 1.42 (15.sup.2 × 0. 00629=1.415).

As used herein the term "spunbond" refers to a process in which small diameter fibers are formed by extruding molten thermoplastic material as filaments from a plurality of fine, usually circular capillaries of a spinnerette with the diameter of the extruded filaments then being rapidly reduced as by the process shown, for example, in U.S. Pat. No. 4, 340,563 to Appel et al., and U.S. Pat. No. 3,692,618 to Dorschner et al., U.S. Pat. No. 3,802,817 to Matsuki et al., U.S. Pat. Nos. 3,338,992 and 3, 341,394 to Kinney, U.S. Pat. Nos. 3,502, 538 to Levy, U.S. Pat. No. 3,502, 763 to Hartman, and U.S. Pat. No. 3,542,615 to Dobo et al. Spunbond fibers are generally continuous and have diameters larger than 7 microns, more particularly, between about 10 and 30 microns. Spunbond fibers are generally not tacky when they are deposited onto the collecting surface.

As used herein the term "meltblown" refers to a process in which fibers are formed by extruding a molten thermoplastic material through a plurality of fine, usually circular, die capillaries as molten threads or filaments into converging high velocity gas (e.g. air) streams which attenuate the filaments of molten thermoplastic material to reduce their diameter, which may be to microfiber diameter. Thereafter, the meltblown fibers are carried by the high velocity gas stream and are deposited on a collecting surface to form a web of randomly disbursed meltblown fibers. Such a process is disclosed, for example, in U. S. Pat. No. 3, 849,241 to Butin. Meltblown fibers are microfibers which may be continuous or discontinuous and are generally smaller than 10 microns in diameter.

As used herein the term "meltspun" includes "spunbond" or "meltblown", and may or may not include bonding.

As used herein the term "polymer" generally includes but is not limited to, homopolymers, copolymers, such as for example, block, graft, random and alternating copolymers, terpolymers, etc. and blends and modifications thereof. Furthermore, unless otherwise specifically limited, the term "polymer" shall include all possible molecular geometrical configurations of the material. These configurations include, but are not limited to isotactic, syndiotactic and random symmetries.

As used herein, the term "machine direction" or "MD" means the length of a fabric in the direction in which it is produced. The term "cross machine direction" or "CD" means the width of fabric, i.e. a direction generally perpendicular to the MD.

As used herein the term "monocomponent" fibers refers to fibers formed from one polymer only. This is not meant to exclude fibers formed from one polymer to which small amounts of additives have been added for coloration, anti-static properties, lubrication, hydrophilicity, and the like. These additives, e.g. titanium dioxide for coloration, are generally present in an amount less than 5 weight percent and more typically about 2 weight percent.

As used herein the term "bicomponent fibers" refers to fibers which have been formed from at least two polymers extruded from separate extruders but spun together to form one fiber. The polymers are arranged in substantially constantly positioned distinct zones across the cross-section of the bicomponent fibers which extend continuously along the length of the bicomponent fibers. The configuration of such a bicomponent fiber may be, for example, a sheath/core arrangement wherein one polymer is surrounded by another, or may be a side by side arrangement, or an "islands-in-the-sea" arrangement.

As used herein the term "biconstituent fibers", or biconstituent webs", refers to fibers, or webs, which have been formed from at least two polymers extruded from the same extruder as a blend. The term "blend" is defined below. Biconstituent fibers or webs do not have the various polymer components arranged in relatively constantly positioned distinct zones across the cross-sectional area of the fiber or web. The various polymers are usually not continuous along the entire length of the fiber or web, although some could be, and instead usually form fibrils which start and end at random. Biconstituent fibers, or webs, are sometimes also referred to as multiconstituent fibers, or multiconstituent webs.

As used herein the term "blend" means a mixture of two or more polymers while the term "alloy" means a sub-class of blends wherein the components are immiscible, but have been compatibilized. "Miscibility" and "immiscibility" are defined as blends having negative and positive values, respectively, for the free energy of mixing. Further, "compatibilization" is defined as the process of modifying the interfacial properties of an immiscible polymer blend in order to make an alloy.

As used herein, through air bonding, or "TAB", means a process of bonding a nonwoven bicomponent fiber web, or a nonwoven web comprising some bicomponent fiblers, which is wound at least partially around a perforated roller which is enclosed in a hood. Air, which is sufficiently hot to melt one of the polymers of which the fibers of the web are made, is forced from the hood, through the web and into the perforated roller. The air velocity is between 100 and 500 feet per minute and the dwell time may be as long as 6 seconds. The melting and resolidification of the polymer provides the bonding. Through air bonding has restricted variability and is generally regarded a second step bonding process.

### DETAILED DESCRIPTION

The unique method of the present invention provides a continuous filament nonwoven web with good uniformity and mobile fibers for use in a nonwoven composite having higher integrity, thereby avoiding the use of those methods described above. This invention includes the immediate use of a "hot air knife", or HAK, on the just-formed continuous filaments of the nonwoven web to temporarily consolidate the fibers, and then hydroentangles the temporarily consolidated web to controllably disassociate the HAK bonds. Subsequent steps thereafter can comprise applying a discontinuous fiber layer and hydroentangling of the composite to integrate the structure.

Small diameter continuous filaments can be formed by extruding molten thermoplastic material as separate fibers from a plurality of fine, usually circular capillaries of a spinnerette. The diameter of the extruded filaments is then rapidly reduced via air drawing and subsequently quenched to set the fiber diameter. Fibers produced using this method are generally continuous and have diameters larger than 7 microns, more particularly, between about 10 and 30 microns. The quenched fibers are deposited on a moving foraminous belt or forming wire where they form an unbonded nonwoven web.

As mentioned above, the continuous filament process uses thermoplastic polymers which may be any known to those skilled in the art. Such polymers include polyolefins, polyesters, polyurethanes and polyamides, and mixtures thereof, more particularly polyolefins such as polyethylene, polypropylene, polybutene, ethylene copolymers, propylene copolymers and butene copolymers. Polypropylenes that have been found useful include, for example, homopolymer available from the ExxonMobil Chemical Company of Houston, TX, under the trade designation PP3155, and homopolymers available from The Dow Chemical Company of Midland, MI, under the trade name PP 5D49. The continuous filaments can have cross-sections that are round, bicomponent, side-by-side, shaped, hollow, or the like, with typical deniers from 1 to 3 dpf. Filaments also be monocomponent or bicomponent, or webs can be mono or bi-constituent.

A hot air knife (HAK) is a device which focuses a stream of heated air at a very high flow rate, generally from about 1000 to about 10000 feet per minute (fpm) (305 to 3050 meters per minute) at the nonwoven web immediately after its formation. The HAK air is heated to a temperature insufficient to melt the polymer in the fiber, but sufficient to soften it slightly. This temperature is generally between about 200° and 550° F. (93° and 290°C.) for the thermoplastic polymers commonly used in continuous filament meltspinning. A properly controlled HAK, operating under the conditions presented herein, can serve to lightly bond monocomponent or bicomponent fibers, or fibers in a mono-constituent or bi-constituent nonwoven web without detrimentally affecting fiber/web properties and may even improve the fiber/web properties, thereby obviating the need for compaction rolls.

The HAK's focused stream of air is arranged and directed by at least one slot of about 1/8 to 1 inches (3 to 25 mm) in width, particularly about 3/4 inch (19.1 mm), serving as the exit for the heated air towards the unbonded nonwoven web, with the slot running in a substantially cross machine direction (CD) over substantially the entire width of the web. In other embodiments, there may be a plurality of slots arranged next to each other or separated by a slight gap. At least one slot is preferable, but other configurations are also useable, e.g., closely spaced holes.

The HAK has a plenum to distribute and contain the heated air prior to its exiting the slot. The plenum pressure of the HAK is preferably between about 0.5 and 56.0 inches of water, and the HAK is positioned between about 0.25 and 10 inches and more preferably 0.75 to 3.0 inches (19 to 76 mm) above the forming wire. In a particular embodiment, the HAK's plenum size is at least twice the cross sectional area for CD flow relative to the total exit slot area.

Since the foraminous forming wire or surface onto which the polymer is formed generally moves at a high rate of speed, the time of exposure of any particular part of the nonwoven web to the air discharged from the hot air knife is less a tenth of a second and generally about a hundredth of a second, in contrast with the through air bonding process which has a much larger dwell time. The HAK process has a great range of variability and controllability of at least the air temperature, air volume, air velocity and distance from the HAK plenum to the nonwoven web.

The hydroentangling may be accomplished utilizing conventional hydroentangling equipment well known in the art. Such hydroentangling equipment can be obtained from Fleissner GmbH of Egelsbach, Germany, or other well known manufacturers. The hydroentangling of the present invention may be carried out with any appropriate working fluid such as, for example, water. The working fluid flows through a manifold which evenly distributes the fluid to a series of individual holes or orifices. These holes or orifices may be from about 0.003 to about 0.015 inch in diameter. For example, the invention may be practiced utilizing a manifold containing a strip having 0.007 inch diameter orifices, 30 holes per inch, and 1 row of holes. Many other manifold configurations and combinations may be used. For example, a single manifold may be used or several injectors may be arranged in succession.

In the hydroentangling process, the working fluid passes through the orifices at a pressures ranging from about 200 to about 3500 pounds per square inch gage (psig). At the upper ranges of the described pressures it is contemplated that the material or materials, such as a nonwoven web, may be processed at speeds of about 500 feet per minute (fpm) to about 2000 fpm. The fluid impacts the material which are supported by a foraminous surface or wire which may be, for example, a single plane mesh having a mesh size of from about 40 times 40 to about 100 times 100. The foraminous surface may also be a multi-ply mesh having a mesh size from about 50 times 50 to about 200 times 200. As is typical in many water jet treatment processes, vacuum slots may be located directly beneath the hydroentangling injectors and/or beneath the foraminous entangling surface downstream of the hydroentangling manifold so that excess water is withdrawn from the hydroentangled material or materials.

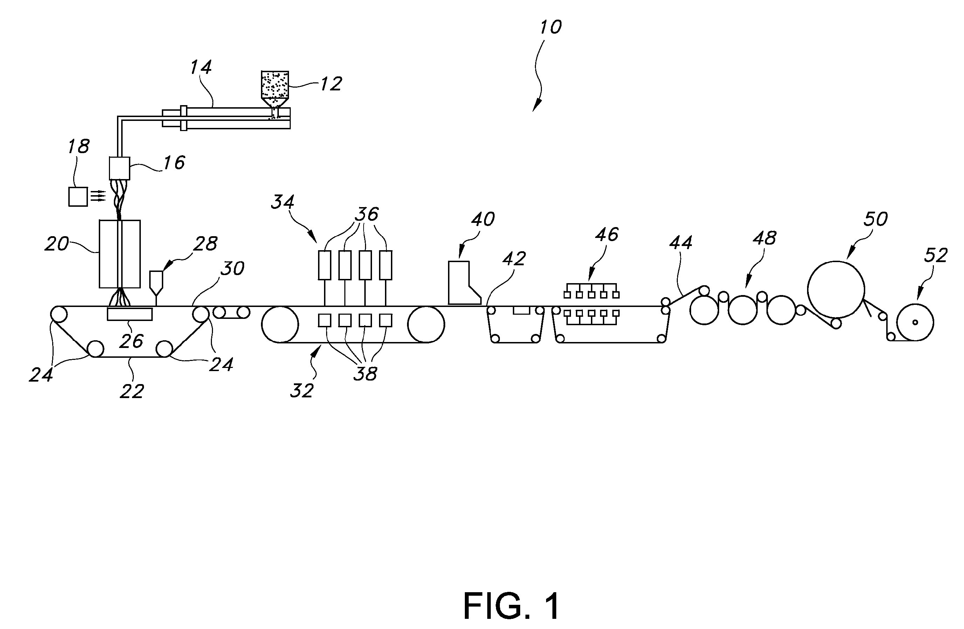

Referring to FIG. 1, there is schematically illustrated at 10 an exemplary process for providing optimum integrity to a nonwoven web for a nonwoven composite in accordance with the principles of the present invention. Polymer is added to hopper 12 from which it is fed into extruder 14. Extruder 14 melts the polymer and forces it into spinnerette 16. Spinnerette 16 has openings arranged in one or more rows forming a downwardly extending curtain of continuous filaments when the polymer is extruded. Air from quench blower 18 quenches the continuous filaments as they leave spinnerette 16. Although not illustrated, additional air from quench blowers can be positioned opposite to and/or below that illustrated. Fiber draw unit 20, which is used to draw the continuous filaments to their final diameter, is positioned below spinnerette 16 for receiving the quenched filaments. An endless, generally foraminous forming surface 22, which travels around guide rollers 24, receives the continuous filaments from fiber draw unit 20, and vacuum 26 draws the continuous filaments against forming surface 22, thereby forming a continuous filament nonwoven web 30. Immediately after formation, hot air is directed through the continuous filament nonwoven web from hot air knife (HAK) 28 to lightly bond the filaments without detrimentally affecting filament properties. This is important since it is desirable not to substantially distort the filaments or permanently bond them to each other. In other words, there is insignificant mechanical deformation of the filaments, thereby resulting in higher strength as compared to methods that do mechanically deform filaments, such as compaction rolls. This results in optimizing the web for subsequent processing, such as hydroentangling, winding, transporting, and unwinding when necessary due to manufacturing needs, as further described below.

Thereafter, nonwoven web 30 is moved by conveyor assembly 32 to hydroentangling station 34 where it is selectively hydroentangled by water jets provided by injectors 36. Vacuum modules 38, which may be located directly beneath injectors 36 or downstream therefrom, withdraw excess water, from hydroentangled web 30. With respect to injectors 36 and vacuum modules 38, their number, orientation, spacing, and the like can be selectively chosen as appropriate to a specific operation of the present invention and materials used. One significant and advantageous effect in the hydroentangling of web 30 at this point is that the hydroentangling controllably breaks some of the temporary bonds created by the HAK, thereby resulting in the continuous filaments becoming more flexible and mobile, and thus increasing the capacity of the filaments to be entangled together. This effect is particularly beneficial in subsequent hydroentangling of other fibrous layers into web 30 in that it provides increased integrity and strength to the resulting product. Furthermore, using the HAK and hydroentangling steps provides a broader, effective and useable range of subsequent hydroentangling pressures on nonwoven web 30 without causing substantial disruption of its filaments, as well as maximizing fiber mobility, resulting in the aforementioned increased integrity and strength.

Another advantage of the present invention concerns the need to be able to wind a roll of a continuous filament nonwoven web for transporting to and unwinding at another location for subsequent processing. This need can occur when the various processing steps cannot occur in one on-line process, as is illustrated in FIG. 1. For example, nonwoven web 30 may be wound after the HAK step at the HAK 28 and then transported, or may be wound after both the HAK 28 and hydroentangling station 34 and then transported.

Nonwoven web 30 is then moved to material supply station 40 where a first layer 42 of a select material, or materials, is provided on web 30. First layer 42 can include any material desired for the end use of the final product. Examples of a material include pulp fibers, staple fibers, individual layers of pulp fibers and staple fibers, or a mixture of pulp fibers and staple fibers. Additionally, first layer 42 can be a continuous filament nonwoven web such as, by way of example only, nonwoven web 30. Layer 42 can include a continuous filament nonwoven web and fibers or a mixture of fibers, such as those earlier described above. Thereafter, web 30 and first layer 42 are moved to a second hydroentangling station 46 where both layer 42 and web 30 are hydroentangled together to form nonwoven composite 44. An example of one nonwoven composite 44 of the present invention includes pulp fibers and staple fibers, in which continuous filament nonwoven web 30 comprises 15% to 30% by weight of the nonwoven composite 44; the staple fibers comprise 20% to 35% by weight of the nonwoven composite 44; and the pulp fibers comprise 45% to 65% by weight of the nonwoven composite 44 In another example of a nonwoven composite 44, the composite includes pulp fibers, in which in which continuous filament nonwoven web 30 comprises 15% to 30% by weight of the nonwoven composite 44; and the pulp fibers comprise 20% to 65% by weight of the nonwoven composite 44.

The present invention further contemplates layers in addition to first layer 42. For example, a second layer (not shown) can be provided from another supply station (not shown) onto first layer 42 for subsequent processing, such as hydroentangling, with first layer 42 and web 30. This second layer may, or may not, be a continuous filament nonwoven web that has been both lightly bonded with hot air and hydroentangled, or only lightly bonded with hot air, or only hydroentangled. As can be appreciated, numerous combinations of layers and materials are contemplated by the method of the present invention to produce numerous finished products.

From second hydroentangling station 46, nonwoven composite 44 moves to drying station 48 for selective drying, then to creping station 50 for selective creping, and finally to winding station 52 for winding onto a roll for subsequent use or processing. Various types of drying, creping, and winding equipment are well known in the art, and suitable equipment appropriate to a process can be selectively chosen.

As earlier stated, the present invention provides good uniformity, integrity, and optimum entanglement and mobility of the immediately produced continuous filaments by use of lightly bonding with hot air and hydroentangling. This virtually eliminates the undesirable movement of the continuous filaments as they move through the remaining steps of the process. The present invention is particularly advantageous when the continuous filaments have a relatively low basis weight and thus a greater tendency to move around. The invention includes the immediate use of a HAK, on the just-formed continuous filaments of the nonwoven web, to temporarily consolidate the fibers, and then hydroentangles the temporarily consolidated web to controllably disassociate the HAK bonds. Subsequent steps thereafter can comprise applying a discontinuous fiber layer and hydroentangling of the composite to integrate the structure.

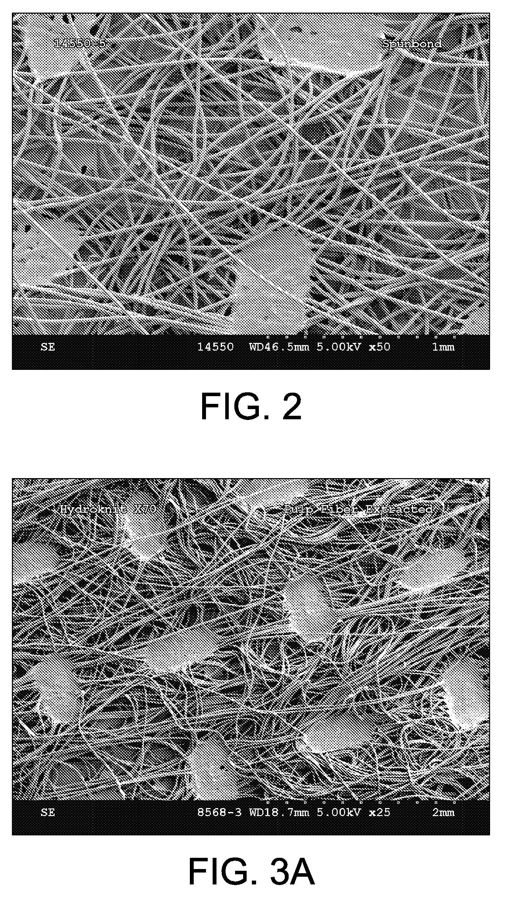

Turning now to Figures 2-6c, there is presented scanning electron microscope photomicrographs (SEM) of commercially produced product and the nonwoven composite of the present invention. These SEM's illustrate the improvement provided by the present invention in utilizing a HAK and hydroentangling steps to improve uniformity, integrity, and optimum entanglement and mobility of the immediately produced continuous filaments versus commercially produced product.

Figure 2 is a scanning electron microscope (SEM) photomicrograph (5.0 kv, x50) of the surface of a commercially produced thermally point bonded (TPB) spunbond (SB). Notice the hardened areas which appear as smooth or continuous surfaces, and that ultimately result in decreased bulk or loft, permanent deformation to the fibers, decreased absorbency, decreased integrity, production line shutdown, and imperfections in the production process, as earlier described.

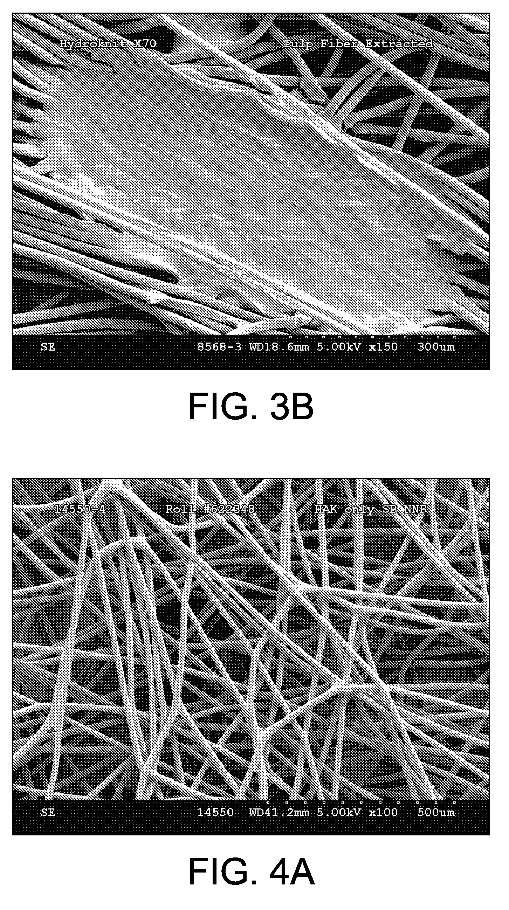

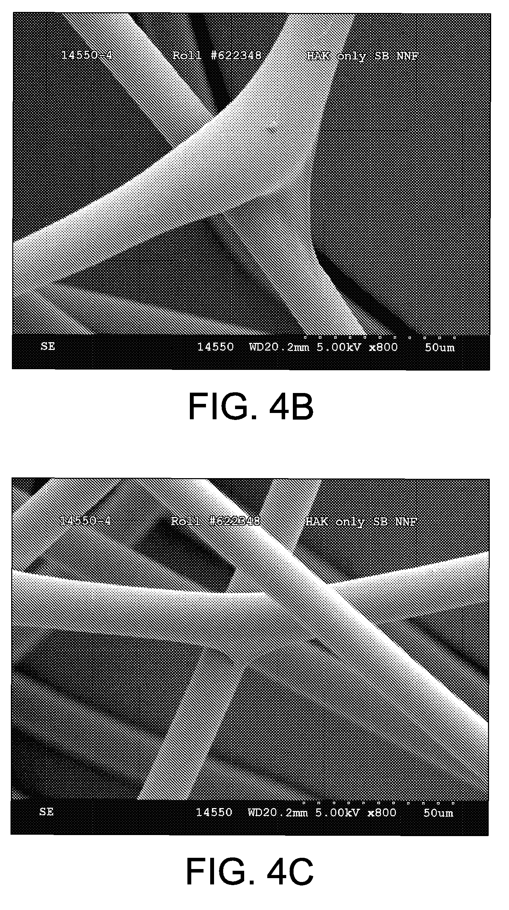

With results identical or similar to the product in Figure 2, Figures 3a and 3b are a SEM photomicrograph (5.0 kv, x25) of a commercially hydroentangled wiper product produced from a TPB SB and discontinuous fibers where the discontinuous fibers have been acid extracted, and a SEM photomicrograph (5.0 kv, x150) of a commercially hydroentangled wiper product produced from a TPB SB and discontinuous fibers where the discontinuous fibers have been acid extracted. Again, notice the hardened areas or surfaces.
The results of using a HAK process are shown in Figures 4a-4c. Figure 4a is a SEM photomicrograph (5.0 kv, x100) of the surface of a continuous filament nonwoven web that has been temporarily consolidated using the HAK process; note the slightly bonded areas. Figure 4b is a SEM photomicrograph (5.0 kv, x800) of a single HAK bond point in a continuous filament nonwoven web that has been temporarily consolidated using the HAK process. Figure 4c is a SEM photomicrograph (5.0 kv, x800) of another single HAK bond point in a continuous filament nonwoven web that has been temporarily consolidated using the HAK process.

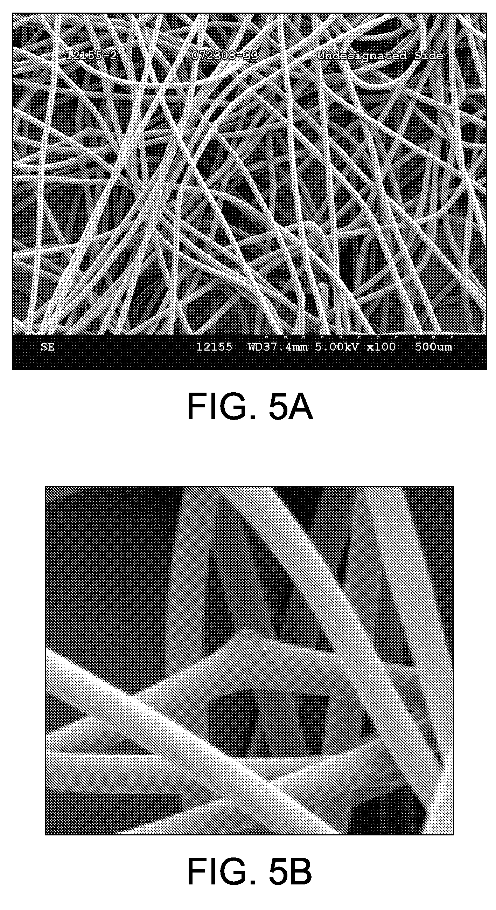

In distinct contrast to the above products, the present invention is shown in Figures 5a-6c. Figure 5a is a SEM photomicrograph (5.0 kv, x100) of the surface of a continuous filament nonwoven web that has been temporarily consolidated using the HAK process and then hydroentangled. Note the virtual absence of hardened areas or surfaces associated with the products earlier described and shown. This absence results in increased bulk or loft; absence of deformation to the fibers; increased absorbency; increased integrity, marked decrease in production line shutdowns; and virtual absence of imperfections in the production process.

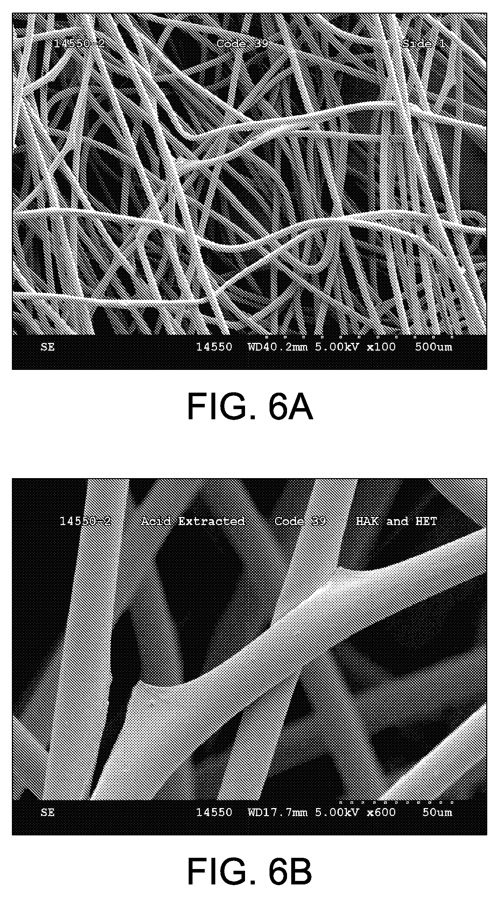

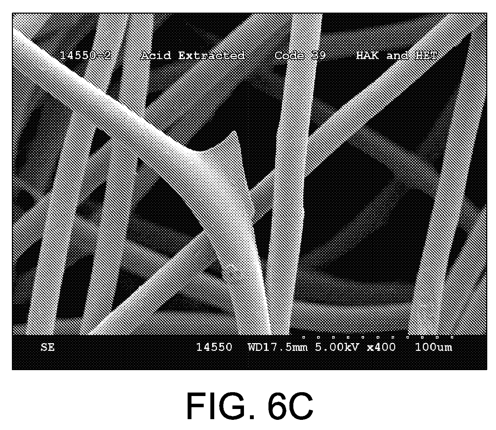

Figure 5b is a magnification of a SEM photomicrograph (5.0 kv, x∼700) of a single broken HAK bond point in a continuous filament nonwoven web that has been temporarily consolidated using the HAK process and then hydroentangled; Figure 6a is a SEM photomicrograph (5.0 kv, x100) of a nonwoven composite of the present invention where the discontinuous fibers have been acid extracted out of the composite; Figure 6b is a SEM photomicrograph (5.0 kv, x600) of two broken HAK bond points in a nonwoven composite of the present invention where the discontinuous fibers have been acid extracted out of the composite; and Figure 6c is a SEM photomicrograph (5.0 kv, x400) of a single broken HAK bond point in a nonwoven composite of the present invention where the discontinuous fibers have been acid extracted out of the composite.

Again, this absence of hardened areas or surfaces provided by the present invention results in increased bulk or loft; absence of deformation to the fibers; increased absorbency; increased integrity, marked decrease in production line shutdowns; and virtual absence of imperfections in the production process.

While this invention has been described as having a preferred embodiment, it will be understood that it is capable of further modifications. It is therefore intended to cover any variations, equivalents, uses, or adaptations of the invention following the general principles thereof, and including such departures from the present invention as come or may come within known or customary practice in the art to which this invention pertains and fall within the limits of the appended claims

## Claims

1. A method of making a nonwoven composite, comprising the step of:
providing a continuous filament nonwoven web (30), and
**characterised in that** the method further comprises the steps of:
lightly bonding the continuous filament nonwoven web (30) with hot air,
hydroentangling the lightly bonded continuous filament nonwoven web (30),
providing a first layer (42) on the lightly bonded, hydroentangled continuous filament nonwoven web (30), and
hydroentangling the first layer (42) with the lightly bonded, hydroentangled continuous filament nonwoven web (30).

2. The method of claim 1 further comprising the steps of
winding the lightly bonded continuous filament nonwoven web (30) onto a roll, transporting the roll of the lightly bonded continuous filament nonwoven web (30), and
unwinding the roll of lightly bonded continuous filament nonwoven web (30) prior to the step of hydroentangling.

3. The method of claim 1 further comprising the steps of
winding the lightly bonded, hydroentangled continuous filament nonwoven web (30) onto a roll,
transporting the roll of the lightly bonded, hydroentangled continuous filament nonwoven web (30), and
unwinding the roll of hydroentangled, lightly bonded continuous filament nonwoven web (30) prior to the step of providing a layer.

4. The method of any preceding claim wherein the step of providing a first layer (42) includes providing pulp fibers; or wherein the step of providing a first layer (42) includes providing staple fibers; or wherein the step of providing a first layer (42) includes providing a mixture of pulp fibers and staple fibers; or wherein the step of providing a first layer (42) includes providing a continuous filament nonwoven web (30).

5. The method of any of claims 1, 2 or 3 wherein the step of providing a first layer (42) includes providing a continuous filament nonwoven web (30) and fibers selected from the group consisting of pulp fibers, staple fibers, and a mixture of pulp fibers and staple fibers.

6. The method of any preceding claim wherein the step of hydroentangling the lightly bonded continuous filament nonwoven web (30) further includes controllably breaking bonds of the lightly bonded continuous filament nonwoven web (30).

7. The method of any preceding claim further comprising the step of providing a second layer, and then hydroentangling the second layer and the first layer (42) with the lightly bonded, hydroentangled continuous filament nonwoven web (30).

8. The method of claim 7 wherein the second layer is lightly bonded with hot air and/or wherein the second layer is hydroentangled.

9. The method of any preceding claim wherein the continuous filament nonwoven web (30) is lightly bonded using a hot air knife, wherein the hot air knife is heated to a temperature insufficient to melt the polymer in the fiber, but sufficient to soften it slightly.

10. The method of claim 9 wherein said temperature is between about 93° and 290°C (200° and 550°F).

## Patentansprüche

1. Verfahren zum Herstellen eines Vliesverbunds umfassend die Schritte:
Bereitstellen eines Endlosfaservliesstoffs (30), und
**dadurch gekennzeichnet, dass** das Verfahren ferner die Schritte umfasst:
leichtes Verbinden des Endlosfaservliesstoffs (30) mit heißer Luft,
Wasserstrahlverfestigen des leicht verbundenen Endlosfaservliesstoffs (30),
Bereitstellen einer ersten Lage (42) auf dem leicht verbundenen, wasserstrahlverfestigten Endlosfaservliesstoff (30), und
Wasserstrahlverfestigen der ersten Lage (42) mit dem leicht verbundenen, wasserstrahlverfestigten Endlosfaservliesstoff (30).

2. Verfahren nach Anspruch 1 ferner umfassend die Schritte:
Aufwinden des leicht verbundenen Endlosfaservliesstoffs (30) auf eine Rolle,
Transportieren der Rolle des leicht verbundenen Endlosfaservliesstoffs (30), und
Abwickeln der Rolle des leicht verbundenen Endlosfaservliesstoffs (30) vor dem Schritt der Wasserstrahlverfestigung.

3. Verfahren nach Anspruch 1 ferner umfassend die Schritte:
Aufwickeln des leicht verbundenen, wasserstrahlverfestigten Endlosfaservliesstoffs (30) auf eine Rolle,
Transportieren der Rolle des leicht verbundenen, wasserstrahlverfestigten Endlosfaservliesstoffs (30), und
Abwickeln des wasserstrahlverfestigten, leicht verbundenen Endlosfaservliesstoffs (30) vor dem Schritt des Bereitstellens einer Lage.

4. Verfahren nach einem vorherigen Anspruch, wobei der Schritt des Bereitstellens der ersten Lage (42) ein Bereitstellen von Breifasern beinhaltet; oder wobei der Schritt des Bereitstellens einer ersten Lage (42) ein Bereitstellen von Stapelfasern beinhaltet; oder wobei der Schritt des Bereitstellens einer ersten Schicht (42) ein Bereitstellen einer Mischung aus Breifasern und Stapelfasern beinhaltet; oder wobei der Schritt des Bereitstellens einer ersten Lage (42) ein Bereitstellen eines Endlosfaservliesstoffs (30) beinhaltet.

5. Verfahren nach einem der Ansprüche 1, 2 oder 3, wobei der Schritt des Bereitstellens einer ersten Lage (42) ein Bereitstellen eines Endlosfaservliesstoffs (30) und von Fasern ausgewählt aus der Gruppe bestehend aus Breifasern, Stapelfasern und einer Mischung aus Breifasern und Stapelfasern beinhaltet.

6. Verfahren nach einem vorherigen Anspruch, wobei der Schritt des Wasserstrahlverfestigens des leicht verbundenen Endlosfaservliesstoffs (30) ferner ein kontrolliertes Brechen der Bindungen des leicht verbundenen Endlosfaservliesstoffs (30) umfasst.

7. Verfahren nach einem vorherigen Anspruch ferner umfassend den Schritt des Bereitstellens einer zweiten Lage, und anschließend ein Wasserstrahlverfestigen der zweiten Lage und der ersten Lage (42) mit dem leicht verbundenen, wasserstrahlverfestigten Endlosfaservliesstoff (30).

8. Verfahren nach Anspruch 7, wobei die zweite Lage mit heißer Luft leicht verbunden ist und/oder wobei die zweite Lage wasserstrahlverfestigt ist.

9. Verfahren nach einem vorherigen Anspruch, wobei der Endlosfaservliesstoff (30) unter Verwendung einer Heißluftrakel leicht verbunden wird, wobei die Heißluftrakel auf eine Temperatur erwärmt ist, die nicht ausreichend ist, um das Polymer in der Faser zu schmelzen, jedoch ausreichend ist, um dieses leicht zu erweichen.

10. Verfahren nach Anspruch 9, wobei die besagte Temperatur zwischen ungefähr 93 und 290°C (200 und 550°F) ist.

## Revendications

1. Procédé de fabrication d'un composite non-tissé, comprenant l'étape de :
fournir une nappe non tissée de filaments continus (30), et
**caractérisé en ce que** le procédé comprend en outre les étapes de :
lier faiblement la nappe non tissée de filaments continus (30) avec de l'air chaud,
hydro-enchevêtrer la nappe non tissée de filaments continus faiblement liée (30),
fournir une première couche (42) sur la nappe non tissée de filaments continus hydro-enchevêtrée faiblement liée (30), et
hydro-enchevêtrer la première couche (42) avec la nappe non tissée de filaments continus hydro-enchevêtrée faiblement liée.

2. Procédé selon la revendication 1, comprenant en outre les étapes de
enrouler la nappe non tissée de filaments continus faiblement liée (30) sur un rouleau,
transporter le rouleau de nappe non tissée de filaments continus faiblement liée (30), et
dérouler le rouleau de nappe non tissée de filaments continus faiblement liée (30) avant l'étape d'hydro-enchevêtrement.

3. Procédé selon la revendication 1, comprenant en outre les étapes de
enrouler la nappe non tissée de filaments continus hydro-enchevêtrée faiblement liée (30) sur un rouleau,
transporter le rouleau de nappe non tissée de filaments continus hydro-enchevêtrée faiblement liée (30), et
dérouler le rouleau de nappe non tissée de filaments continus hydro-enchevêtrée faiblement liée (30) avant l'étape de fourniture d'une couche.

4. Procédé selon l'une quelconque des revendications précédentes,
dans lequel l'étape de fourniture d'une première couche (42) comprend la fourniture de fibres de pâte ; ou
dans lequel l'étape de fourniture d'une première couche (42) comprend la fourniture de fibres discontinues, ou
dans lequel l'étape de fourniture d'une première couche (42) comprend la fourniture d'un mélange de fibres de pâte et de fibres discontinues ; ou
dans lequel l'étape de fourniture d'une première couche (42) comprend la fourniture d'une nappe non tissée de filaments continus (30).

5. Procédé selon l'une quelconque des revendications 1, 2 ou 3, dans lequel l'étape de fourniture d'une première couche (42) comprend la fourniture d'une nappe non tissée de filaments continus (30) et des fibres choisies dans le groupe comprenant des fibres de pâte, des fibres discontinues, et un mélange de fibres de pâte et de fibres discontinues.

6. Procédé selon l'une quelconque des revendications précédentes, dans lequel l'étape d'hydro-enchevêtrement de la nappe non tissée de filaments continus faiblement liée (30) comprend en outre la rupture contrôlée de liaisons de la nappe non tissée de filaments continus faiblement liée (30).

7. Procédé selon l'une quelconque des revendications précédentes, comprenant en outre l'étape de fournir une seconde couche, puis hydro-enchevêtrer la seconde couche et la première couche (42) avec la nappe non tissée de filaments continus hydro-enchevêtrée faiblement liée (30).

8. Procédé selon la revendication 7, dans lequel la seconde couche est liée faiblement avec de l'air chaud et/ou dans lequel la seconde couche est hydro-enchevêtrée.

9. Procédé selon l'une quelconque des revendications précédentes, dans lequel la nappe non tissée de filaments continus (30) est faiblement liée à l'aide d'une lame d'air chaud, dans lequel la lame d'air chaud est chauffée à une température insuffisante pour faire fondre le polymère dans la fibre, mais suffisante pour la ramollir légèrement.

10. Procédé selon la revendication 9, dans lequel ladite température est comprise entre environ 93° et 290°C (200° et 550°F).
